# EUROPEAN PATENT SPECIFICATION

(11) **EP 0 652 294 B1**
(45) Date of publication and mention of the grant of the patent: **18.10.2000**
(21) Application number: 94115434.6
(22) Date of filing: 30.09.1994
(51) Int. Cl.: C22B 19/04, C22B 5/04

(54) **Method for producing easily volatile metals**
Verfahren zur Gewinnung leicht verflüchtigungsfähiger Metalle
Procédé pour la préparation de métaux facilement volatilisables

(30) Priority: 14.10.1993 FI 934550
(43) Date of publication of application: 10.05.1995
(73) Proprietor: OUTOKUMPU RESEARCH OY, 28101 Pori (FI)
(72) Inventor: Talonen, Timo, F-28660 Pori (FI); Eerola, Heikki, SF-28400 Ulvila (FI); Roine, Antti, SF-28450 Vanha-Ulvila (FI)
(74) Representative: Zipse + Habersack

(56) References cited:
- EP-A- 0 570 942
- GB-A- 2 048 309
- US-A- 2 858 205
- US-A- 3 463 630

## Description

The present invention relates to a method to be used in processes for producing easily volatile metals from their sulfides. Known furnace constructions comprise usually two closely connected furnaces, a reduction furnace and a converter, which are operated at normal pressure, so that the material transfer therebetween is arranged to take place continuously by means of at least one channel provided in between the furnaces. As a result of chemical reactions taking place in the furnaces, the hydrostatic pressure of the furnaces changes. In addition, volumes of the melt layers in the furnaces change. Circulations via at least one channel resulting from these changes at the same time bring about recycling of sulfide matte from the reduction furnace to the converter, which is needed in the process, as well as the recycling of molten metal from the converter to the reduction furnace.

Some newer pyrometallurgical processes for producing zinc, lead, cadmium and some other easily volatile metals utilize the reduction of the said metal sulfides by means of copper, in which case there are formed copper matte and vapors of the metals in question, which are then condensed. In these processes, copper matte is continuously removed from the reaction space and transferred to another furnace in order to oxidize the sulfur contained in the matte and in order to release the copper back to metallic copper. From the copper matte processing furnace, there is continuously removed metallic copper and returned to the said reaction space to replace the copper consumed in the reduction of metal sulfide.

The oxidic substances contained in the raw material, or the substances that possibly oxidize in the process, form a slag layer in the furnace which serves as the reaction space, which slag layer also must be removed either from time to time or continuously.

In order to perform the above described functions, the GB patent application 2 048 309 utilizes a combination of furnaces comprising two adjacent reverber-type furnaces, one of which is located somewhat higher than the other. Concentrate is fed into a molten copper matte located in the lower furnace. The zinc sulfide of the concentrate is converted into metallic zinc, which is volatilized from the furnace. The copper matte formed in the furnace is recycled by means of a gas lift through an underpressure chamber to the upper furnace, where it or at least part thereof is oxidized with the oxygen supplied into the furnace into metallic copper, which due to gravity circulates back into the smelting furnace located underneath. The heat required by endothermic reactions taking place in the smelting furnace and the underpressure pump is obtained by circulating an excessive amount of sulfide matte in the upper furnace serving as a converter, or the matte can be further heated by means of burners.

The Finnish patent application 92 2301 relates to a zinc process resembling the one described above, wherein the used reaction space is an electric furnace. In the furnace there are essentially two molten layers: metallic copper on the bottom, and sulfidic copper matte on top of that. As a third layer in the furnace, there is formed a slag layer on top of the matte layer. A sulfidic raw material is fed into the copper layer pneumatically through a tubular lance. The used carrier gas is nitrogen or some other inert gas. As a result of the reactions taking place in the copper layer there is formed matte which arises from the copper layer and enters the matte layer located thereupon.

The electric furnace is heated by electric current, by getting the electrodes into contact with the layers of matte and slag. Now these layers serve as a resistor where thermal energy developes. The formed copper matte can be converted into copper and slag according to some known process, for instance in a Pierce-Smith converter.

The Pierce-Smith converter is a batch reactor, and consequently the whole process is operated in a batchwise fashion, so that matte is removed from the electric furnace in batches, and copper is transferred from the converter to the electric furnace in batches. In addition to the drawbacks that are typical of batch processes, large amounts of matte and metallic copper must be transported in between the furnaces, which leads to additional costs and harmful fumes.

Continuously operated converters also are used nowadays. In the Mitsubishi copper process, copper matte flows from the smelting furnace in a continuous flow along the chute to the converting furnace. Typically there are three layers: molten copper at the bottom and copper matte on top of it, the topmost layer being the slag layer. Converting takes place as a continuous process by blowing air or oxygen enriched air through cooled nozzles to the surface of the molten layer. The formed slag is removed continuously from the surface of the molten layer. The formed copper is removed as a continuous flow from the bottom of the converting furnace.

When the reduction furnace described in the Finnish patent application 92 2301, wherein the sulfide of volatile metal is reduced by copper, and a converter are interconnected by means of a chute, the formed matte can be conducted into the converter as a continuous flow. However, the formed copper must be removed from the converter at a level so low that the own weight of the copper is not enough to make it flow back into the reduction reactor, but it must be tapped to a vessel and transported therein.

The US 2,858,205 shows a combination of reduction furnace and converter which are connected by means of two channels which are arranged to be immersed in the melt. By means of these two vertical spaced apart channels a kind of circulation is provided in the melt layers, which again causes turbulence.

The US 3,463,630 concerns a converter and a zinc extractor which are directly attached in a kind of close mutual arrangement of converter and zinc extractor. A continuous transfer of liquid and gases between the units should be simple. Therefore a pump is to be placed in the system for a continuous movement of copper or brass.

In order to avoid the above described drawbacks, i.e. the circulation of the melt caused by means of feeding gas into the process, or the transportation taking place from one furnace to another, there is now developed a method of the present invention as specified in claim 1, wherein the reduction furnace and the converting furnace are closely connected at normal pressure. Advantageously the furnaces are located on the same level, or on different levels, but they are interconnected by means of at least one channel. The chemical reactions taking place in each furnace cause that the hydrostatic pressure in the furnaces change. In addition, volumes of the melt layers in the furnaces change. Recycling of the different molten phases in between the furnaces also is carried out by means of the circulations caused by the said changes. Thus the sulfide matte layer formed in the reduction furnace is recycled to the converter, and from the converter there is respectively recycled the already reduced molten metal back into the reduction furnace. The essential novel features of the invention are apparent from the appended patent claims.

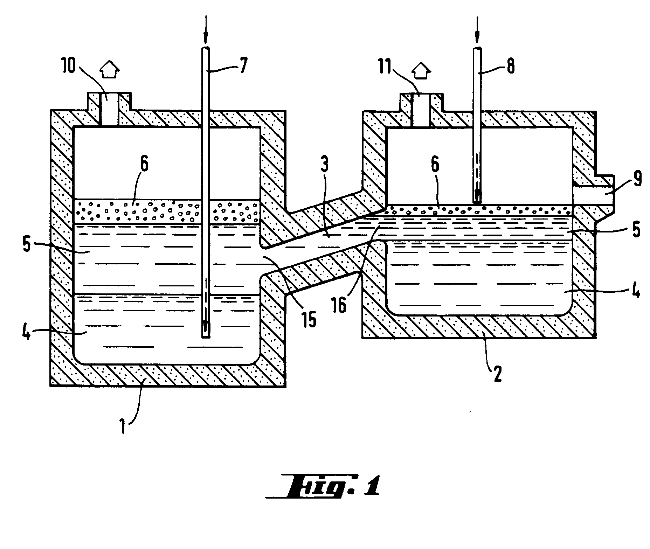

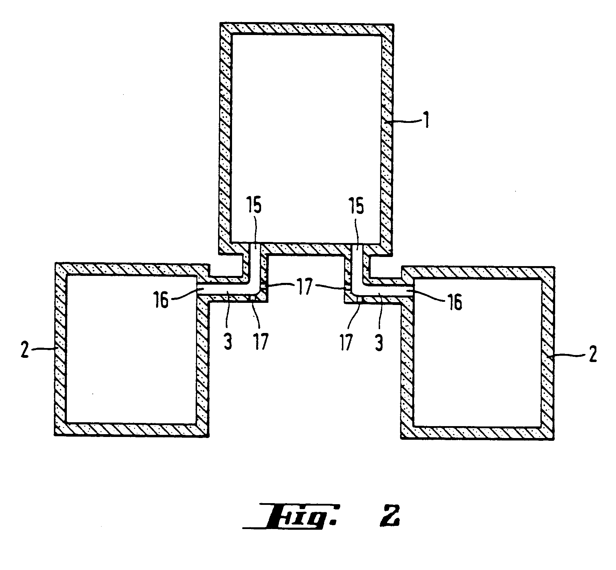

The invention is further described with reference to the appended drawings, wherein
figure 1 is a schematical side view illustration of an embodiment of a device to be used in connection with the present invention, and figure 2 is a top view illustration of an alternative embodiment of the apparatus of the present invention.

As is seen in figure 1, a furnace construction to be used in connection with the invention for processing easily volatile metals, comprises two furnaces wherein an electric furnace 1 is used as a reduction furnace, and a converter 2 serves as a matte oxidizing furnace. The furnaces may be arranged on the same level or on different levels.

In this alternative, the furnaces are interconnected by means or a tubular channel 3. The form and the construction or the channel are not decisive but the channel can be either essentially horizontal or it can be inclined so that its reduction furnace side end 15 is either on a higher or lower level than the converter side end 16. Essential is that the channel is situated so that there is no connection between the gas spaces of the furnaces and that the copper metal formed in the converter owing to gravity, is recycled into the electric furnace. This means that at least another end of the channel must always be immersed in the melt, no matter the melt were metal, matte or slag. In practice, the both ends of the channel are usually immersed in the melt.

The lowermost layer in the both furnaces is a copper melt layer 4 and a matte melt layer 5 on top of it, the topmost layer in both furnaces being a slag melt layer 6.

A sulfidic raw material, which contains at least one of the metals zinc, lead or cadmium, preferably zinc and possibly lead and cadmium, in sulfidic form, is injected into the reduction furnace by means of a lance 7. As a result of chemical reactions the amount of copper begins to decrease because it forms copper matte owing to the sulfidization of copper.

When the metal is converted to matte, the average density of the molten material is decreased and the melt level of the reduction furnace tends to raise. The rise of the hydrostatic pressure causes again transferring of matte into the converter.

In the converter the copper matte is oxidized with oxygen, air or their mixture blown through a lance 8, back to metallic copper. The formed copper settles as the heaviest on the bottom of the converter. During the process working, the surface of the copper layer is at such a height that the formed new copper settles due to gravity into the reduction furnace. The slag formed in the converting reaction is removed from the converter through a discharge opening 9.

The metal vapours formed in the reduction furnace like zinc and possibly lead and cadmium, are discharged from the top part of the reduction furnace through an aperture 10. Sulfur dioxide and other gases formed in the converter are discharged through an aperture 11 in the top part of the converter.

When the process is started by injecting sulfidic raw material into the reduction furnace through the lance 7, and by simultaneously blowing air, oxygen or oxygen enriched air into the converter, the amount of copper contained in the reduction furnace starts to reduce, because it forms matte owing to the sulfidization of copper. In the converter, the copper matte recycled therein changes into metallic copper as a result of the converting reaction. In the course of the process, the average density of the molten material contained in the reduction reactor is thus reduced, and the average density of the material contained in the converter is respectively increased. As a result, the pressure balance in the channel between the furnaces is disturbed, and copper begins to flow from the converter into the reduction reactor. Respectively, matte formed in the reduction furnace and possibly slag begin to flow into the converter via the channel. These circulations continue as long as the process is being run.

In an alternative embodiment of a device to be used in connection with the invention, the electric furnace and the converter are in fact parts of one and the same furnace, which parts are only separated by means of a partition wall, so that in between the two parts there remains one or many holes.

If it is to be suspected that the channels in between the reduction furnace and the converter may be blocked in some using conditions, the furnaces can advantageously be arranged cornerwise, in the fashion illustrated in figure 3. In that case the channels 3 connecting the furnaces 1 and 2 are advantageously formed of two elements arranged at right angles with respect to each other. In both parts, on different sides of the angle, there can be provided normal lockable openings 17 generally used in metallurgical furnaces, through which openings any possible blockages are removed for instance by melting with oxygen.

As is seen in figure 2, the number of the converters is not limited to one, but there may be several of them, for instance two per each reduction furnace, in which case one of them functions in normal fashion while the other is in maintenance.

## Claims

1. A method for producing easily volatile metals such as zinc, lead and cadmium by means of two closely connected furnaces (1, 2) operated under normal pressure, wherein a sulfidic concentrate of at least one easily volatile metal is fed into a molten metal bath in a reduction furnace (1), where the easily volatile metals contained in the concentrate are converted into metallic form and removed from the furnace as vaporous, a molten metal sulfide matte and slag formed in the furnace are recycled into a converter (2) in order to convert the metal sulfide back into metal; a formed slag is discharged from the converter, and the metal formed in the converter is recycled to the reduction furnace, whereby the furnaces (1, 2) are interconnected by means of only one channel (3) having at least one of its ends being immersed in the melt so that the recycling of materials in between the furnaces is brought about by means of the changes caused in the hydrostatic pressure and volumes of the melt layers (4, 5, 6) by chemical reactions taking place in the furnaces.

2. A method according to claim 1,
characterized in that the both ends of the channel (3) are immersed in the melt.

3. A method according to claim 1,
characterized in that the employed molten metal is copper.

4. A method according to claim 1,
characterized in that the reduction furnace and the converter are located essentially on the same level.

## Patentansprüche

1. Verfahren zum Gewinnen leichtflüchtiger Metalle wie Zink, Blei und Cadmium mittels zweier eng miteinander verbundener Schmelzöfen (1, 2), welche unter normalem Druck betrieben werden, wobei ein sulfidisches Konzentrat zumindest eines leichtflüchtigen Metalls einem Metallschmelzbad in einem Reduktionsofen (1) zugeführt wird, wo im Konzentrat enthaltene leichtflüchtige Metalle in ihre metallischen Form überführt und vom Schmelzofen als Dampf entfernt werden, und wobei im Schmelzofen erzeugter geschmolzener Metallsulfidstein und Schlacke in einen Konverter (2) zurückgeführt werden, um das Metallsulfid zurück in Metall umzuwandeln; bei welchem Verfahren die gebildete Schlacke aus dem Konverter entfernt und das im Konverter gebildete Metall in den Reduktionsofen zurückgeführt wird, wobei die Schmelzöfen (1, 2) mittels ausschließlich eines Kanals (3) verbunden sind, welcher mit zumindest einem seiner Enden in der Schmelze derart eingetaucht ist, daß das Zurückführen von Material zwischen den Schmelzöfen durch Änderungen im hydrostatischen Druck und im Volumen der Schmelzschichten (4, 5, 6)aufgrund von in den Schmelzöfen stattfindenden chemischen Reaktionen bewirkt wird.

2. Verfahren nach Anspruch 1,
dadurch gekennzeichnet,
daß beide Enden des Kanals (3) in der Schmelze eingetaucht sind.

3. Verfahren nach Anspruch 1,
dadurch gekennzeichnet,
daß das eingesetzte geschmolzene Metall Kupfer ist.

4. Verfahren nach Anspruch 1,
dadurch gekennzeichnet,
daß der Reduktionsofen und der Konverter auf im wesentlichen derselben Höhe angeordnet sind.

## Revendications

1. Procédé pour préparer des métaux aisément volatilisables comme par exemple du zinc, du plomb et du cadmium, au moyen de deux fours (1, 2) raccordés à proximité l'un de l'autre et fonctionnant sous une pression normale, selon lequel un concentré sulfurique d'au moins un métal aisément volatilisable est introduit dans un bain de métal fondu dans un four de réduction (1) dans lequel les métaux aisément volatilisables, contenus dans le concentré, sont amenés par conversion sous forme métallique et sont retirés du four à l'état de vapeur, une matte de sulfure métallique et des scories, formées dans le four, sont recyclées dans un convertisseur (2) servant à convertir de façon inverse le sulfure métallique en un métal; des scories formées sont évacuées du convertisseur, et le métal formé dans le convertisseur est renvoyé par recyclage au four de réduction, les fours (1, 2) étant raccordés à l'aide d'un seul canal (3) dont au moins l'une des extrémités est immergée dans la masse fondue de sorte que le recyclage de matériau entre les fours est exécuté au moyen des modifications produites de la pression hydrostatique et des volumes des couches fondues (4, 5, 6) au moyen de réactions chimiques intervenant dans les fours.

2. Procédé selon la revendication 1, caractérisé en ce que les deux extrémités du canal (3) sont immergées dans la masse fondue.

3. Procédé selon la revendication 1, caractérisé en ce que le métal fondu utilisé est du cuivre.

4. Procédé selon la revendication 1, caractérisé en ce que le four de réduction et le convertisseur sont situés essentiellement au même niveau.
